# EUROPEAN PATENT APPLICATION

(11) **EP 4 797 077 A1**
(43) Date of publication of application: **26.08.2026**
(21) Application number: 25199708.6
(22) Date of filing: 02.09.2025
(51) Int. Cl.: G06F 8/41, G06F 8/71, G06N 5/022

(54) **GENAI-BASED CONTEXT-AWARE MERGE REQUESTS REVIEW SYSTEM AND METHOD**

(30) Priority: 21.02.2025 EP 25159421
(71) Applicant: Siemens Aktiengesellschaft, 80333 München (DE)
(72) Inventor: Elhashemy, Hanya, 85748 Garching (DE)
(74) Representative: Siemens Patent Attorneys

(57) **Abstract**

Merge requests (MRs) are vital for maintaining code quality, fostering collaboration, and catching potential issues through peer review before merging changes into the code base. However, in practice, this activity is often neglected due to its time consumption, team members lacking shared understanding of the code, or underestimating its long-term benefits in favor of quick fixes and immediate results. Code Guardian (CG), a GenAl-based context-aware MR review assistant is designed to support development teams to identify and resolve potential problems in software systems during the development phase. CG integrates with DevOps platforms, analyzing code changes within MRs. The system's core objectives include enhancing code quality, speeding up development processes, and reducing the cognitive load of reviewers.

## Description

### BACKGROUND OF THE INVENTION

Merge requests (MRs), also known as pull requests (PRs) in platforms like GitHub, are essential components of collaborative software development. They serve as a mechanism for developers to propose changes to a code base, allowing for code review, discussion, and integration of new features or bug fixes into the main project code base. The primary purpose of MRs is to facilitate collaboration between developers, ensuring that code contributions are thoroughly reviewed and vetted before they become part of the production code base. This process not only improves the quality of the code but also promotes the sharing of knowledge and collective ownership of the code among team members. Despite their importance, the merge request process can be time-consuming. This is primarily due to the need for thorough code reviews, which involve examining the proposed changes for correctness, style adherence, and potential impacts on existing functionalities.

To fix bugs, errors and to reach code quality is important in particular for software/ code files for running and/or steering and/or controlling a technical system e.g. an industrial machine or device or a roboter or any (automated) guided vehicle, where errors in the code can or unmaintainable, unstructured code lead to a risk in safety.

Additionally, developers often need to engage in discussions to address feedback and resolve any conflicts that arise during the merging process. The social dynamics of collaboration, such as the varying levels of responsiveness from team members, can further complicate and prolong this process making it very costly.

In a preliminary study by Zhao et al. [35] based on 74 projects, the median time taken by a reviewer to make decisions on MRs is 16.25 hours. In large teams or open-source projects where contributors may not be familiar with each other's work the process time of MRs could be even longer due to the effort needed to comprehend the code first before being able to review it. Although resource intensive, the MR process is necessary to ensure that the final integrated code is robust, maintainable, and free of defects, ultimately leading to higher quality software.

This leads to the need for tools to assist the MR process.

Merge requests (MRs) are vital for maintaining code quality, fostering collaboration, and catching potential issues through peer review before merging changes into the code base. However, in practice, this activity is often neglected due to its time consumption, team members lacking shared understanding of the code, or underestimating its long-term benefits in favor of quick fixes and immediate results.

Code review is a resource-intensive task, that researchers aim to automate, and is therefore a well investigated area. Several notable tools have emerged to optimize the MR process, for example, by prioritizing MRs to detect the most critical [28], automatically assigning the most suitable reviewer, or automatically organizing MRs to minimize merge conflicts [23], in addition to a wide range of static code analysis tools that can be integrated in MRs to detect a subset of well-defined errors.

The latest research examined the use of ChatGPT [24] in MR reviews and showed first promising results to adapt LLMs for context-aware MR reviews.

It is possible that tools like ChatGPT can help to reduce the mental workload of reviewers by explaining code changes. It is possible that developers conceive only 30.7% of ChatGPT responses to MR review questions negatively, and this is often due to lack of practical utility, the response containing errors or fail to meet project-specific constraints.

Future work should focus on adapting LLMs to capture domain-specific knowledge about code changes. It is argued that LLMs, when fine-tuned effectively using LoRA and with the right input format, can outperform traditional small pre-trained models on code-change-related tasks. In addition to the limitations of the related work on context-awareness the concerns about the confidentiality of private code and compliance with security and privacy policies are highlighted when using commercial GenAl/LLMs, like ChatGPT.

Other commercial platforms like GitHub Copilot [21] and GitLab Duo [16] offer a premium tier, which promises a MR Al assistant feature that is aware of the project's code base. However, it is required to migrate the code to their infrastructure and they lack transparency on how the code base is processed for such features. In addition, the offered features currently focus on providing a summary of the MR or auto-completing its description, and less on answering the MR review comments or reviewer questions. Similar tools also lack knowledge about internal processes, deadlines, strategic decisions, etc.

It is an objective of the invention to provide a method and/or system that overcome the drawbacks of the mentioned prior art.

### SUMMARY OF THE INVENTION

The above-mentioned objective is achieved by a method and one or more apparatus and/or a system and/or a device according to the independent claims and features in the following. Preferred embodiments of the invention are described. Any combination of the described features is possible.

An aspect of the invention is a system for a LLM-based context-aware merge request review comprising
- a user interface for receiving a merge request, abbreviated as MR,
- an access interface for access to a code base to be changed according the MR after review of the MR,
- an interface to a Large Language Module, abbreviated as LLM, which can be fine-tuned and specifically trained on instruction datasets, whereby the LLM receives at least one prompt populated with retrieved context from a RAG (retrieval augmented generation), whereby the retrieved context consists of the changed files initiated by the MR and of direct dependent files from the changed files,
- an output interface providing any LLM's response posted as a comment in the MR.

According to an embodiment of the invention the at least one prompt represents
- a first prompt to instruct the LLM to provide a summary of the changes introduced with the MR, and
- a further prompt to assess the impact of the code changes on the rest of the code base if the changes are merged.

The inventive GenAl-based context-aware MR review assistant is designed to is designed to operate as a repository-level assistant, drawing on its deep integration to provide precise, context-aware responses. It supports development teams to identify and resolve potential problems in software systems during the development phase. The context-aware LLM-based MR assistant that is customizable and reusable across any repository. Code Guardian (CG) is introduced. CG integrates with DevOps platforms, analyzing code changes within MRs. The system's core objectives include enhancing code quality, speeding up development processes, and reducing the cognitive load of reviewers. Enhanced quality software/ code files running and/or steering and/or controlling a technical system e.g. an industrial machine or device or a roboter or any (automated) guided vehicle reduce safety risks like collision of vehicles or system crashes.

The proposed architecture of CG using an (on-premise) LLM, allows its integration to (private) repositories. Data privacy is insured. Evaluation of it is implemented to ensure its reliability and value for development teams.

On the implementation level, to use CG, a stage is introduced in their build pipeline dedicated to CG and reference the URL of CG's repository through an include statement. In addition, the environment variables of CG are configured and include a project access token, so CG can access the code base. CG can be triggered at any time after the build.

CG uses a fine-tuned version of the LLM, specifically trained on instruction datasets. This LLM is utilized by sending prompts as requests to its OpenAl-compatible API (Application programming interface), which allows for seamless integration and potential exchange of the LLM with another of choice. The prompts are used to instruct the LLM to perform a specific MR review activity.

Preferably a GraphRAG pipeline is built to make the LLM aware of the context of the code base.

According to an embodiment of the invention the context retrieval is refined by connecting code file dependencies from a dependency tree where embeddings generated from extracted code data and meta data are stored.

Relevant data is collected, such as the code base and any other relevant information or reports. The extracted code data can be cleaned and processed further and embeddings are generated.

The context retrieval can be refined with data from a comments thread if a question of the at least one is part of the thread.

Preferably MR caused changes are covered by at least one code test.

The LLM analyses the changes made in the MR and evaluates their test coverage: Is there an existing test suite related to the changes? Are all edge cases covered? Does the test suit need to be updated? Are there conflicts between the defined test cases and the changes in the functional behavior introduced in the MR? The LLM answers such questions and provides suggestions regarding testing. The LLM identifies, whether MR changes have related test suites through embedding the entired code base and applying similarity search on the embeddings [36] in a vector database, where the embeddings can be stored, to identify existing related test files.

Such a vector database, abbreviated DB, is useful for context retrieval later in the pipeline. To optimize the context retrieval a dependency tree of the code base can be included as an optional layer.

A test suite is a collection of test cases that are used to validate the functionality and performance of software applications. It systematically groups various test cases to cover different aspects of the application. [37]

System's tool's features are mapped to well-established NLP tasks and can conduct a structured evaluation. The evaluated features preferably include (1) Code summarization: Responding to an instruction demanding code explanation (e.g. summary of the MR); (2) Code generation from comment: Answering open-ended questions that require code generation (e.g. refactoring for better reusability); (3) Text understanding and text generation: answering open-ended questions that contain text as a reply.

The system can comprise an interface to an evalutation system which assesses the relevance of the LLM's responses by classifying input and output data and prompted task according to their types, assigning evaluation metrics, for instance such as correctness, answer relevance and faithfulness, for each classified data and task and by building an evaluation dataset for the assessment, whereby the evaluation system can assess the built evaluation dataset.

For evaluating code summarization, a faithfulness metric can be used to ensure the generated text is faithful to the provided context and does not introduce new unsupported information. A Semantic Similarity cab be used to assess the subject similarity between the model's responses and the expected/reference answers.

This metric is often used for text generation evaluation, but also to evaluate whether CG's code summarization indeed has the same meaning as the input code. Answer Correctness can be caclulated, evaluating how well the model's responses satisfy the user's information need. This metric potentially correlates with whether the model understood the question.

According to an embodiment of the invention a further LLM as a judge assesses the semantic similarity and accuracy of the LLM's responses if the evaluation dataset misses ground-truth data and/or assessment result for the built evaluation dataset remains under a pre-defined threshold.

The LLM-as-a-judge can be used to calculate the target metrics. The LLM judge with a prompt is provided that lists and describes the relevant aspects to be analyzed. The prompt can include two sets of texts: one is the assistant's reply and the other set is either the user's reply (the ground truth) or the input question and context. The LLM judge then calculates metrics related to the correctness and semantic similarity between these two text sets. The prompt used for the LLM-as-a-judge also considers the clarity of the generated text as a way to evaluate its quality.

The evaluation system can also assess the context retrieval from the RAG by context-related metrics, for instance such as precision and recall.

In addition to evaluating the LLM's generation performance, the context retrieval strategy employed by Code Guardian's RAG pipeline can be assessed. A Context Precision metric can be used to measure the quality of the RAG's retrieval process.

Experiments showed that CG can provide correct answers to real-world developers' questions in a shorter time frame compared to human reviewers from the open-source repository analyzed, helping team members in MR activities that demand high effort, such as code understanding.

Generative Al (GenAl) has the potential to significantly enhance the MR process in software development by streamlining communication, improving code quality, and facilitating faster reviews. The integration of GenAl tools can automate various aspects of the MR workflow, thus reducing the time and effort required from developers and reviewers.

GenAl can enhance the clarity and effectiveness of communication within merge requests. By generating summaries of changes, highlighting key modifications, and even suggesting improvements based on best practices. GenAl can facilitate better understanding among team members. Improved communication can lead to more productive discussions, allowing reviewers to focus on substantive feedback rather than clarifying basic aspects of the code changes.

A further aspect of the invention is a computer-implemented method for a LLM-based context-aware merge request review (MR) comprising steps of
- receiving a merge request abbreviated as MR,
- having access to the code base to be changed according the MR after review of the MR,
- prompting a LLM using least one prompt populated with retrieved context from a RAG, whereby the retrieved context consists of the changed files initiated by the MR and of direct dependent files from the changed files,
- providing any LLM's response posted as a comment in the MR.

The method for assisting a LLM/GenAl-based context-aware merge request review supports software development in identifying and resolving problems in the software code base wherein prompts are used to instruct an LLM to perform a merge request review activity and evaluation of it is designed to ensure reliability and value for the development process.

These tools mentioned in the introduction are complementary to the presented invention, which focuses on supporting reviewers in understanding the code changes in an MR and decreasing the response waiting time on comments with the help of an omnipresent large language model (LLM)-based assistant.

Embodiments as described above for the system can be analogously applied for the method and for computer program (product) and for a computer-readable storage and/ provisioning medium.

The computer-readable storage medium stores instructions executable by one or more processors of a computer, wherein execution of the instructions causes the computer system to perform the method. The one or more processors can be distributed organized on servers or in a cloud.

The computer program (product) is executed by one or more processors of a computer and performs the method.

One or more processors of the system can steer and/or control and/or load and/or execute method steps of the invention. The processor can be part of a server or of a runtime environment within the system.

The assistant as a systems can be implemented by hardware, firmware and/or software modules or a combination of them.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, embodiments that are presently preferred are shown in the drawings, it being understood, however, that the invention is not limited to the specific instrumentalities disclosed. In the figures, identical or functionally identical elements are denoted by identical reference signs. Included in the drawings are the following figures:
The figure 1 shows a flow of events when interacting with Code Guardian, showing different ways to trigger the tool and how it updates its context when new review comments are added to the MR,
The figure 2 depicts Code Guardian's GraphRAG pipeline, showing how the code base is extracted, processed and retrieved to populate the prompt template to be sent to the LLM (Large Language Model).

### DETAILED DESCRIPTION OF PREFERRED EXAMPLES/EMBODIMENTS

Code Guardian (CG) is a context-aware LLM-based MR assistant/system, meaning that it has the understanding of the complete code base on repository level and can be included as part of the build pipeline of any code base. It is currently integrated into the user interface of GitLab, but can be easily integrated in any other similar platforms, like GitHub.

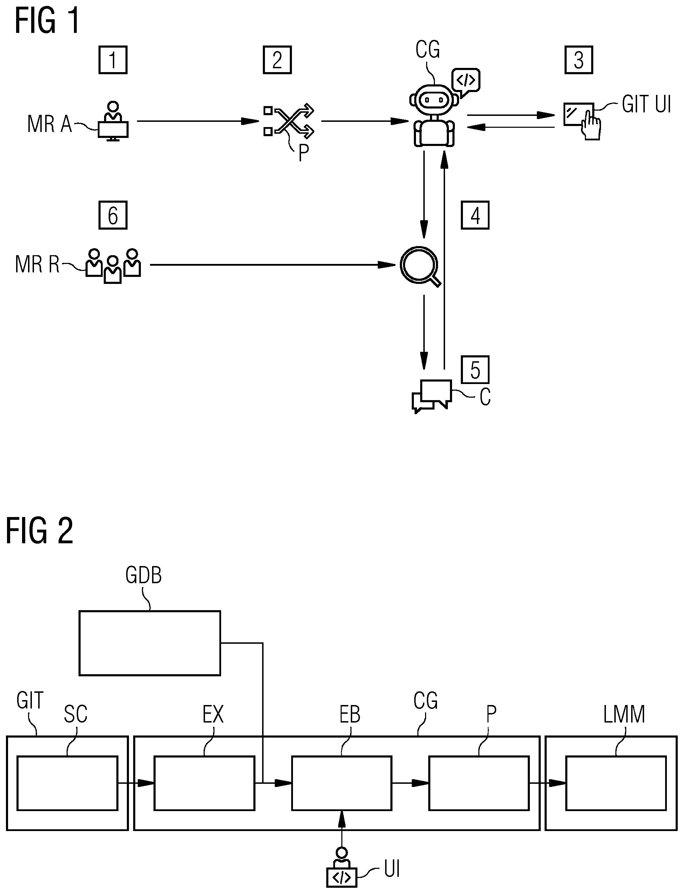

Figure 1 shows the high-level flow of enumerated events within CG. Method steps are marked with 1 to 5. When a developer MRA submits a new MR (step 1) it automatically triggers the build pipeline P, which also includes a trigger for Code Guardian CG (step 2). This starts the Code Guardian pipeline illustrated in figure 2 and sets the context. The output of the initial Code Guardian pipeline execution is an initial MR review (step 3) submitted as comments directly on the GitLab User Interface Git UI. After that, the Code Guardian assistant remains available for reviewers MRR (step 6) to consult by mentioning the assistant in the review comments with the "@code-guardian-bot" tag. When team members add new comments C (step 5) the context of Code Guardian (step 4) is updated with their additional review input. In the interactions with Code Guardian, team members have the option to either a.) Accept CG's suggestions as is, b.) Reject the suggestions by ignoring them, or c.) Ask CG follow-up questions. This puts the control in the hands of the team members to make the final decision.

On the implementation level, to use Code Guardian, developers need to add a stage in their build pipeline dedicated to Code Guardian and reference the URL of Code Guardian's repository through an include statement. In addition, developers need to configure the environment variables of Code Guardian and include a project access token, so Code Guardian can access their code base. To be able to trigger Code Guardian at any time after the build, developers need to configure a webhook for their project in GitLab or their platform of choice.

Code Guardian (CG ) preferably uses Mistral-7b-instruct [2], marked with LLM, a fine-tuned version of the Mistral 7B LLM, specifically trained on instruction datasets. This LLM is utilized by sending prompts as requests to its OpenAl-compatible API [25], which allows for seamless integration and potential exchange of the LLM with another of choice. The prompts are used to instruct the LLM to perform a specific MR review activity. It is differentiated between built-in prompts and external user prompts.

External user prompts are anything the reviewer or developer writes after tagging CG with "@code-guardian-bot". This could be a follow-up question to an ongoing conversation thread, or a request (e.g. requesting CG to refactor code).

The external user prompts are not limited to questions about the code files changed in the MR, but any files in the code base. However, when asking about external private APIs that are not part of the code base, for example, CG response will state that it does not have this knowledge yet.

Built-in prompts designed after the chain-of-thought (CoT) [34] approach are meant for the different activities to analyze the code for review. Two main built-in prompts are used with possibility to extend them. One prompt to instruct the LLM to provide a summary of the changes introduced with the MR. And the second is about what is called "blast radius" analysis, which examines the effect of the code changes on the rest of the code base if merged.

Currently, this prompt is designed to analyze the effect on the test coverage. This examines if the MR changes are covered by existing tests and if additional tests need to be included. CG is configurable to run built-in prompts during the initial MR review triggered by the build (see figure 1 Step 3) or later in the comments section through a command. An example of a command is "@code-guardian-bot /merge-request-summary" for the summary prompt.

Figure 2 explains how a GraphRAG [18] pipeline is built to make the LLM aware of the context of the code base. Using the GitLab python library [1] the relevant data is collected, such as the code base and any other relevant information, for example, sonarqube [29] reports SC. The extracted code data EX is cleaned and processed further and embeddings EB with bge-m3 [5, 9] model are generated.

The embeddings are then stored in a Chroma DB [10] vector database GDB for context retrieval later in the pipeline. To optimize the context retrieval a dependency tree of the code base is included as an optional layer. Using Dependency Cruiser [32] this dependency tree is only generated for JavaScript code, for other programming languages the pipeline runs without the optimization layer retrieving the context from the vector database only. The optimization layer serves as a proof of concept and can be extended to support other programming languages.

In the next step, the prompt template P is populated with the retrieved context. In most of the cases for the built-in prompt, the retrieved context consists of the changed files of the MR in addition to their direct neighbors from the dependency tree graph. For the external user prompts via user input UI, if the question is part of a comments thread, the data from the thread is additionally retrieved as context.

This means that if you ask CG, for example, to "explain what my colleague means in the comment above", CG will be able to answer this question retrieving the input from previous communication thread. This advanced RAG technique also takes meta-data in consideration, so when a reviewer references a file by its name the file is retrieved in the context and used to answer the question, even if the file is not changed in the MR.

Lastly, a request is sent to the LLM's API with the final populated prompt and the LLM, marked with LLM, response is posted as a comment in the MR in GitLab. It should be possible to replicate this tool with the detailed explanation an open source technology stack is utilized.

In the following implementation of evaluation is explained:
To assess the effectiveness of Code Guardian as a peer-review assistant for MRs in a real-world code management setting, the following research questions (RQ) are addressed: RQ1: How transferable are Code Guardian's capabilities across diverse code repositories? This RQ evaluates CG's ability to retrieve and understand the relevant context despite the code base.

RQ2: Can a developer rely on Code Guardian's replies to increase efficiency? This question aims to evaluate the correctness and reliability of the tool's key features, such as code summarization and open-ended question answering, in the context of daily use by developers.

To address each research question, Code Guardian's performance on MRs are evaluated from different repositories. The tool's outputs are submitted to various evaluation metrics to quantify its suitability and ability to improve developers' overall productivity.

To address the RQs, a dataset is required that captures the interactions between developers and a peer reviewer in a real-world code management setting. However, such a dataset does not currently exist. To overcome this challenge, a "golden" dataset is created by examining real-world code repositories and configuring them to use Code Guardian. This allowes to recreate realistic and diverse MR scenarios including the associated discussions between developers. By doing so, an evaluation is ensured with a representative dataset.

The repositories selected for this purpose are a mix of open-source and private projects, with five written in JavaScript and one in Python. JavaScript repositories are prioritized to enable the evaluation of the optimization layer including the dependency tree of the repository files. A total of 15 open questions, including code generation questions (e.g. refactoring), questions referring to functionality and localization of functions of the repository, and design-decision questions are provided.

A dataset entry consists of the main branch in the state it was when the merge was created, a set of the proposed file changes, the users' interactions, and a list of tasks for which that entry can be evaluated. This comprehensive dataset allows to assess CG with respect to the Research Questions.

Ground-truth data are available for some open-ended questions in the dataset, this is because some reviewer comments do not have replies to compare the assistant's reply with. In these cases, alternative evaluation strategies are employed, such as using an LLM-as-a-judge or seeking human labeling.

Firstly, the tool's features are mapped to well-established NLP tasks and conduct a structured evaluation. The evaluated features include (1) Code summarization: Responding to an instruction demanding code explanation (e.g. summary of the MR); (2) Code generation from comment: Answering open-ended questions that require code generation (e.g. refactoring for better reusability); (3) Text understanding and text generation: answering open-ended questions that contain text as a reply.

For evaluating code summarization, the Faithfulness metric is used to ensure the generated text is faithful to the provided context and does not introduce new unsupported information. This is an important indicator for answering RQ1. Semantic Similarity is used to assess the subject similarity between the model's responses and the expected/reference answers.

This metric is often used for text generation evaluation, but also to evaluate whether CG's code summarization indeed has the same meaning as the input code. Answer Correctness is calculated, evaluating how well the model's responses satisfy the user's information need. This metric potentially correlates with whether the model understood the question.

Due to the difference in styles between developers and LLMs, which may differ in answer length and level of detail, the LLM-as-a-judge is used to calculate the target metrics. The LLM judge with a prompt is provided that lists and describes the relevant aspects to be analyzed. The prompt includes two sets of texts: one is the assistant's reply and the other set is either the user's reply (the ground truth) or the input question and context. The LLM judge then calculates metrics related to the correctness and semantic similarity between these two text sets. The prompt used for the LLM-as-a-judge also considers the clarity of the generated text as a way to evaluate its quality.

In addition to evaluating the LLM's generation performance, the context retrieval strategy employed by Code Guardian's RAG pipeline is assessed. The Context Precision metric is used to measure the quality of the RAG's retrieval process. This metric calculates the ratio of the relevant code snippets and comments (True Positives) that the RAG was able to retrieve, compared to the total number of relevant and non-relevant artifacts (True Positives and False Positives) used to generate the response. The LLM-as-a-judge, in this case, analyzes whether the assistant's answer could be generated from the retrieved context.

To ensure the model handles situations where the necessary information is not available, test cases are included to verify whether the model is using parametric data to generate the answer, which could lead to hallucinations. In this case, the hallucination would consist of bias, inconsistencies or factual errors regarding the MR repository files [31].

Finally, Code Guardian's performance is evaluated in chat-based tasks, where users may reference previous interaction rounds in a communication thread. In these cases, it is assessed whether the model correctly understood the user's request by evaluating the Correctness of the reply. A high Correctness score indicates that the model was able to properly interpret the user's question, retrieve and understand the relevant context from the previous interactions, and generate an appropriate response. The metrics of the RAG is evaluated with the RAGAS framework [14], a framework for reference-free evaluation of RAG pipelines. Claude V3 Haiku as LLM to power the LLM-as-a-judge evaluation is used.

To perform the evaluation, the replies of CG to the 15 MR comments from the "golden" dataset are collected. Then relevant metrics are calculated for each response. To answer RQ1, the assistant's ability is evaluated to address all eight open-ended questions about the MR code changes. It achieved 85% correctness on this type of question.

The two questions missed were for the following reasons: In one case, the assistant suggested a refactor that the GitHub developer considered incorrect. In the other, the refactoring was correct but could be further improved, resulting in a lower correctness score.

For the cases where the questions are about files changed in the MR, the model showed a high Faithfulness rate, as these files are always successfully retrieved and the answers were generated having them as context. The remaining dataset includes questions that evaluate CG capacity of retrieving information from files outside of the MR, as well as error-prone questions, e.g. relation between independent files. For error-prone questions, the precision metric is less informative, since there may not always be relevant files to retrieve. Therefore, the context Recall metric is focused, which shows that CG was able to correctly identify that there were no relevant files to retrieve in 75% of these cases.

Additionally, even for questions with a lower correctness score, the model generated responses semantically related to the code base. This is evaluated by using an LLM-based judge to classify the answers as semantically similar to the question and the context. The results showed that the model consistently produced relevant responses. Overall, the model demonstrates the ability to reason about the code based on the provided context, without any leakage of parametric knowledge.

Regarding RQ2, the high correctness and faithfulness achieved in the conducted experiments showed that developers can trust Code Guardian to make faster decisions. Moreover, the assistant's response time has a maximum of 9 minutes. This could be the upper bound for the first run, which is the most resource-intensive as the whole MR context data is set up. Compared to the MR median decision-making time of 16 hours without any assisting tool, using CG can be seen as an opportunity to shorten and improve the code review processes.

To increase the faithfulness even further for the questions that evaluate hallucinations, it is observed that the model achieved higher scores when tasks were broken down into multiple steps, similar to how humans solve coding problems. For example, if a user first asks CG to find the files where a specific function is repeatedly defined, and then asks it to refactor it, the model is then able to identify the right places in the code base to perform the refactor.

The CG replies provide more comprehensive explanations and details to support the developer's code implementation decisions when answering questions about code understanding. This can help support the developer's implementation decisions by documenting the reasoning and thought processes behind the code changes. Overall, these intermediate results demonstrate that CG is a promising tool in supporting developers during their daily MR review tasks, while also increasing their knowledge.

An embodiment of the invention includes extending the tools' features. The built-in prompts could be for example extended with additional types of review activities, like extending the blast radius analysis to also examine the effect of the MR changes on existing features. Another feature could be auto-generating release reports that summarize the content from all MRs that are part of a release. CG could also be extended to utilize the MR automation tools mentioned in the related work section.

The dependency tree feature can be extended to support more programming languages. The tree could also be expanded with additional dependencies to increase the LLM's context awareness. In that regard, the first experiments can also be conducted to extend the tool's context with other non-code-related factors, like project deadlines, team members' skills, hardware limitations, or legal requirements. Adding different factors to the LLM's context, however, leads to increasing hallucinations.

The context extension to multiple factors can lead to lower the precision of the RAG and the correctness of LLM answers, due to bias and incompleteness. To address that, an embodiment of the invention could include a mechanism to perform a weighted text generation, giving more relevance to documents with higher similarity to the user's prompt. Along with that, other LLMs with bigger context limits can be used to support the described extension of the context.

The evaluation of the tool should also be extended. One common practice perceived was that developers address one or more comments with a single commit, therefore including commits as answers to threads would increase the dataset with ground truth data. In addition, more repositories could be used to augment the representability of the dataset and build reliable evaluation.

Lastly, a survey with seven developers during the early design phase of CG can be conducted. An embodiment of the invention will include conducting another survey with CG users, to allow the assessment of the assistant in production and understand new behaviors that can potentially arise from this interaction.

In conclusion, the main contribution of this invention is to offer a context-aware LLM-based MR assistant that is customizable and reusable across any repository. The proposed architecture of CG using an on-premise LLM, allows its integration to (private) repositories. Data privacy is insured. Early-stage experiments showed that CG can provide correct answers to real-world developers' questions in a shorter time frame compared to human reviewers from the open-source repository analyzed, helping team members in MR activities that demand high effort, such as code understanding.

The invention has been described in detail with reference to embodiments thereof and examples. Variations and modifications are possible. Instead of the above-described production process one or more processes can analogously be applied to other technical systems.

The system and its parts can be (computer-) implemented for performing the inventive method steps.

Parts of the system can be integrated into a (computer) cloud system. It includes one or more processors and can be coupled with data, where said processor(s) is/are configured to execute the method steps.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the systems and/or computer and/or another processor may be configured to implement the acts described herein.

The above-described method may be implemented via a computer program (product) including one or more computer-readable storage media having stored thereon instructions executable by one or more processors of a computing system and/or computing engine. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

In addition, and alternatively, it is possible that a control device receives other computer-readable control signals in order to initiate the mentioned steering/control process by its processor(s).

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

### References

[1] 2019. Python GitLab Library. https://python-gitlab.readthedocs.io/en/stable Accessed on January 23, 2025.
[2] Mistral Al. 2023. Mistral-7B-Instruct. https://huggingface.co/mistralai/Mistral-7B-Instruct v0.2 Accessed on January 23, 2025.
[5] BAAI. 2023. bge-m3. https://huggingface.co/BAAI/bge-m3 Accessed on January 23, 2025.
[9] Jianlv Chen, Shitao Xiao, Peitian Zhang, Kun Luo, Defu Lian, and Zheng Liu. 2024. Bge m3-embedding: Multi-lingual, multi-functionality, multi-granularity text embeddings through self-knowledge distillation. arXiv preprint arXiv:2402.03216 (2024).
[10] Chroma. 2022. Chroma DB. https://www.trychroma.com Accessed on January 23, 2025.
[14] Shahul Es, Jithin James, Luis Espinosa Anke, and Steven Schockaert. 2024. RAGAs: Automated Evaluation of Retrieval Augmented Generation. In Proceedings of the 18th Conference of the European Chapter of the Association for Computational Linguistics: System Demonstrations, Nikolaos Aletras and Orphee De Clercq (Eds.). Association for Computational Linguistics, St. Julians, Malta, 150-158. https://aclanthology.org/2024.eacl-demo.16/
[16] GitLab. 2024. GitLab Duo. https://docs.gitlab.com/ee/user/project/merge_requests/duo_in_merge_requests.html Accessed on January 23, 2025.
[18] Haoyu Han, Yu Wang, Harry Shomer, Kai Guo, Jiayuan Ding, Yongjia Lei, Mahantesh Halappanavar, Ryan A Rossi, Subhabrata Mukherjee, Xianfeng Tang, et al. 2024. Retrieval-Augmented Generation with Graphs (GraphRAG). arXiv preprint arXiv:2501.00309 (2024).
[21] Microsoft. 2022. GitHub Copilot. https://githubnext.com/projects/copilot-for-pull-requests Accessed on January 23, 2025.
[23] Agustin Olmedo and Lucas Barbeito. 2024. IPOptimizer: A Tool to Optimize the Pull Request Integration Process. 2024 L Latin American Computer Conference (CLEI) (2024), 1-4. https://doi.org/10.1109/CLEI64178.2024.10700277
[24] OpenAl. 2022. ChatGPT. https://www.openai.com/chatgpt Accessed on January 23, 2025.
[25] OpenAl. 2023. OpenAl API. https://platform.openai.com/docs/api-reference/introduction Accessed on January 23, 2025.
[28] Nishrith Saini and Ricardo Britto. 2021. Using Machine Intelligence to Prioritise Code Review Requests. 2021 IEEE/ACM 43rd International Conference on Software Engineering: Software Engineering in Practice (ICSE-SEIP) (2021), 11-20. https://doi.org/10.1109/ICSE-SEIP52600.2021.00010
[29] Sonarqube. 2007. Sonarqube. https://www.sonarsource.com/products/sonarqube Accessed on January 23, 2025.
[31] S. M Towhidul Islam Tonmoy, S M Mehedi Zaman, Vinija Jain, Anku Rani, Vipula Rawte, Aman Chadha, and Amitava Das. 2024. A Comprehensive Survey of Hallucination Mitigation Techniques in Large Language Models. arXiv:2401.01313 [cs.CL] https://arxiv.org/abs/2401.01313
[32] Sander Verweij. 2019. Dependency Cruiser. https://www.npmjs.com/package/dependency-cruiser Accessed on January 23, 2025.
[34] Jason Wei, Xuezhi Wang, Dale Schuurmans, Maarten Bosma, Fei Xia, Ed Chi, Quoc V Le, Denny Zhou, et al. 2022. Chain-of-thought prompting elicits reasoning in large language models. Advances in neural information processing systems 35 (2022), 24824-24837.
[35] Guoliang Zhao, Daniel Alencar da Costa, and Ying Zou. 2019. Improving the pull requests review process using learning-to-rank algorithms. Empirical Software Engineering 24 (2019), 2140-2170
[36] https://www.elastic.co/what-is/vector-embedding#applications-of-vector-embeddings
[37] https://www.lambdatest.com/learning-hub/test-suite

## Claims

1. A system (CG) for a LLM-based context-aware merge request review comprising
- a user interface (GIT UI) for receiving a merge request, abbreviated as MR,
- an access interface for access to a code base to be changed according the MR after review of the MR,
- an interface to a Large Language Module (LLM), abbreviated as LLM, , whereby the LLM receives at least one prompt (P) populated with retrieved context from a retrieval augmented generation, abbreviated as RAG, whereby the retrieved context consists of the changed files initiated by the MR and of direct dependent files from the changed files,
- an output interface providing any LLM's response posted as a comment in the MR.

2. System according to the previous claim, whereby the at least one prompt represents
- a first prompt to instruct the LLM to provide a summary of the changes introduced with the MR, and
- a further prompt to assess the impact of the code changes on the rest of the code base if the changes are merged.

3. System according to any the preceding claims, whereby the LLM identifies, whether MR changes have related test suites through embedding the entired code base and applying similarity search on the embeddings in a vector database (GDB), where the embeddings can be stored, to identify existing related test files.

4. System according to any of the preceding claims, whereby context retrieval is refined by connecting code file dependencies from a dependency tree where embeddings (EB) generated from extracted code data (EX) and meta data are stored.

5. System according to any of the preceding claims, whereby context retrieval is refined with data from a comments thread if a question of the at least one is part of the thread.

6. System according to any of the preceding claims, whereby the system comprises an interface to an evalutation system which assesses the relevance of the LLM's responses by classifying input and output data and prompted task according to their types, assigning evaluation metrics for each classified data and task and by building an evaluation dataset for the assessment.

7. System according to the previous claim, whereby the evaluation system assesses the built evaluation dataset.

8. System according to any of the preceding claims 6 or 7, whereby a further LLM as a judge assesses the semantic similarity and accuracy of the LLM's responses if the evaluation dataset misses ground-truth data and/or assessment result for the built evaluation dataset remains under a pre-defined threshold.

9. A computer-implemented method for a LLM-based context-aware merge request review (MR) comprising steps of:
- receiving a merge request, abbreviated as MR,
- having access to the code base to be changed according the MR after review of the MR,
- prompting a LLM using least one prompt (P) populated with retrieved context from a RAG, whereby the retrieved context consists of the changed files initiated by the MR and of direct dependent files from the changed files,
- providing any LLM's response posted as a comment in the MR.

10. Method according to the previous claim, whereby the at least one prompt represents
- a first prompt to instruct the LLM to provide a summary of the changes introduced with the MR, and
- a further prompt to assess the impact of the code changes on the rest of the code base if the changes are merged.

11. Method according to any the preceding method claims, whereby the LLM identifies, whether MR changes have related test suites through embedding the entired code base and applying similarity search on the embeddings in a vector database (GDB), where the embeddings can be stored, to identify existing related test files.

12. Method according to any of the preceding method claims, whereby context retrieval is refined by connecting code file dependencies from a dependency tree where embeddings (EB) generated from extracted code data (EX) and meta data are stored.

13. Method according to any of the preceding method claims, whereby a further step is assessing the relevance of the LLM's responses by classifying input and output data and prompted task according to their types, assigning evaluation metrics for each classified data and task and by building an evaluation dataset for the assessment.

14. Method according to the preceding method claim, whereby a further LLM as a judge assesses the semantic similarity and accuracy of the LLM's responses if the evaluation dataset misses ground-truth data and/or assessment result for the built evaluation dataset remains under a pre-defined threshold.

15. A computer program product comprising instructions which, when the program is executed by a computer, cause the computer to carry out a method according to the preceding method claim.
